(19) Europäisches Patentamt
European Patent Office
Office européen des brevets

(11) **EP 4 691 891 A1**

(12) **EUROPEAN PATENT APPLICATION**
published in accordance with Art. 153(4) EPC

(43) Date of publication:
**11.02.2026 Bulletin 2026/07**

(21) Application number: **24779465.4**

(22) Date of filing: **13.03.2024**

(51) International Patent Classification (IPC):
**B62D 65/18** (2006.01)       **G05B 19/418** (2006.01)
**G05D 1/225** (2024.01)       **G05D 1/43** (2024.01)
**G05D 1/80** (2024.01)

(52) Cooperative Patent Classification (CPC):
**B62D 65/18; G05B 19/418; G05D 1/225;
G05D 1/249; G05D 1/43; G05D 1/617; G05D 1/80**

(86) International application number:
**PCT/JP2024/009784**

(87) International publication number:
**WO 2024/203336 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.03.2023   JP 2023053416
23.10.2023   JP 2023181568
22.02.2024   JP 2024025085**

(71) Applicant: **TOYOTA JIDOSHA KABUSHIKI
KAISHA**
**Toyota-shi, Aichi-ken 471-8571 (JP)**

(72) Inventors:
• **IWAHORI, Kento**
  **Toyota-shi, AICHI-KEN 471-8571 (JP)**
• **YOKOYAMA, Daiki**
  **Toyota-shi, AICHI-KEN 471-8571 (JP)**
• **SAITO, Yasuhiro**
  **Kariya-shi, AICHI-KEN 448-8666 (JP)**

(74) Representative: **Cabinet Beau de Loménie
103, rue de Grenelle / CS 90800
75340 Paris Cedex 07 (FR)**

(54) **UNMANNED DRIVING SYSTEM, CONTROL DEVICE, UNMANNED DRIVING METHOD, METHOD FOR MANUFACTURING MOVING BODY, AND MOVING BODY**

(57)    An unmanned driving system includes a moving object movable by remote control; a remote control unit that performs remote control of the moving object and moves the moving object from a first place in a factory where the moving object is produced to a second place in the factory, which is different from the first place; and an information acquisition unit that acquires information regarding abnormality in the moving object. When a predetermined condition including acquisition of information indicating that the moving object has an abnormality before the moving object arrives at the second place is satisfied, the remote control unit moves the moving object to a third place in the factory, which is different from the first place and the second place, before the moving object arrives at the second place.

EP 4 691 891 A1

Fig.1A

## Description

CROSS REFERENCE TO RELATED APPLICATIONS

The patent application claims the priority based on Japanese Patent Applications No. 2023-053416 filed on March 29, 2023, No. 2023-181568 filed on October 23, 2023, and No. 2024-025085 filed on February 22, 2024, the disclosure of which are hereby incorporated by reference in their entireties.

FIELD

The present disclosure relates to an unmanned driving system, a control device, an unmanned driving method, a method for producing a moving object, and a moving object.

BACKGROUND ART

There are known technologies for causing vehicles to run by automatic driving during vehicle production steps (see, for example, Patent Literature 1).

CITATION LIST

PATENT LITERATURE

Patent Literature 1: Japanese Laid-Open Patent Application (PCT Application) Publication No. 2017-538619

SUMMARY

PROBLEM TO BE SOLVED BY THE INVENTION

In the production steps of moving objects such as vehicles, when a moving object is moved from a work place for a pre-step to a work place for a post-step by unmanned driving, a moving object having an abnormality may interfere with the post-step.

MEANS TO SOLVE THE PROBLEM

The present disclosure may be realized by the following aspects.

(1) According to the first aspect of the present disclosure, an unmanned driving system is provided. This unmanned driving system comprises a moving object movable by remote control; a remote control unit that performs remote control of the moving object and moves the moving object from a first place in a factory where the moving object is produced to a second place in the factory, which is different from the first place; and an information acquisition unit that acquires information regarding abnormality in the moving object. When a predetermined condition including acquisition of information indicating that the moving object has an abnormality before the moving object arrives at the second place is satisfied, the remote control unit moves the moving object to a third place in the factory, which is different from the first place and the second place, before the moving object arrives at the second place.

The unmanned driving system according to this aspect is capable of preventing the moving object having an abnormality from moving to the second place. Therefore, it is possible to prevent interference with the work at the second place.

(2) In the unmanned driving system according to the above aspect, the moving object may be equipped with a sensor for detecting an abnormality in the moving object, and the information acquisition unit may acquire information regarding an abnormality detected by using the sensor.

The unmanned driving system according to this aspect is capable of acquiring abnormalities in the moving object by using the sensor in the moving object.

(3) In the unmanned driving system according to the above aspect, the factory may be equipped with a camera for detecting an abnormality in the moving object, and the information acquisition unit may acquire information regarding an abnormality detected by using the camera.

The unmanned driving system according to this aspect is capable of acquiring abnormalities in the moving object by using the camera in the factory.

(4) In the unmanned driving system according to the above aspect, the third place may be a place where a work to address an abnormality in the moving object is performed, and the factory may have a plurality of the third places, each of which has a different content of the work, and the remote control unit may determine a transfer destination of the moving object from among the plurality of third places according to a type of abnormality in the moving object.

The unmanned driving system according to this aspect is capable of moving the moving object to a third place suitable for addressing the abnormality in the moving object.

(5) In the unmanned driving system according to the above aspect, the factory may have a plurality of the third places, the information acquisition unit may further acquire information regarding a congestion level of the plurality of third places, and the remote control unit may determine a transfer destination of the moving object from among the plurality of third places according to the congestion level of the plurality of third places.

The unmanned driving system according to this aspect is capable of eliminating waiting time before the work for addressing abnormalities in the moving object is started at the third place.

(6) In the unmanned driving system according to the above aspect, the remote control unit may adjust at least one of speed and acceleration of the moving object according to a type of abnormality in the moving object.

The unmanned driving system according to this aspect is capable of adjusting at least one of the speed and the acceleration according to the type of abnormality in the moving object, thereby appropriately moving the moving object.

(7) In the unmanned driving system according to the above aspect, when information indicating that the moving object has a predetermined type of abnormality is acquired, the remote control unit may turn the moving object around and then move the moving object backward.

The unmanned driving system according to this aspect is capable of appropriately moving the moving object when the moving object has an abnormality that causes inconvenience in moving the moving object forward.

(8) In the unmanned driving system according to the above aspect, when a condition including acquisition of information indicating that the moving object has an abnormality before the moving object arrives at the second place and a fact that the abnormality occurring in the moving object is an abnormality that interferes with a work to be performed on the moving object at the second place is satisfied, the remote control unit may move the moving object to the third place before the moving object arrives at the second place.

The unmanned driving system according to this aspect is capable of moving a moving object with an abnormality that interferes with a work at the second place to the second place via the third place.

(9) In the unmanned driving system according to the above aspect, even when a condition including acquisition of information indicating that the moving object has an abnormality before the moving object arrives at the second place is satisfied, when the abnormality occurring in the moving object is an abnormality that does not interfere with a work to be performed on the moving object at the second place, the remote control unit may move the moving object to the third place after the moving object arrives at the second place.

The unmanned driving system according to this aspect is capable of moving the moving object with an abnormality that does not interfere with a work at the second place to the third place via the second place.

(10) In the unmanned driving system according to the above aspect, even when a condition including acquisition of information indicating that the moving object has an abnormality before the moving object arrives at the second place is satisfied, when the abnormality occurring in the moving object is an abnormality that interferes with movement of the moving object, the remote control unit may stop movement of the moving object.

The unmanned driving system according to this aspect is capable of preventing the moving object having an abnormality that interferes with the movement from moving.

(11) According to a second aspect of the present disclosure, a control device is provided. This control device comprises a remote control unit that performs remote control of a moving object and moves the moving object from a first place in a factory where the moving object is produced to a second place in the factory, which is different from the first place; and an information acquisition unit that acquires information regarding abnormality in the moving object. When a predetermined condition including acquisition of information indicating that the moving object has an abnormality before the moving object arrives at the second place is satisfied, the remote control unit moves the moving object to a third place in the factory, which is different from the first place and the second place, before the moving object arrives at the second place.

The control device according to this aspect is capable of preventing a moving object having an abnormality from moving to the second place. Therefore, it is possible to prevent interference with the work at the second place.

(12) According to a third aspect of the present disclosure, an unmanned driving method is provided. This unmanned driving method comprises an unmanned driving step of moving a moving object by unmanned driving and moving the moving object from a first place in a factory where the moving object is produced to a second place in the factory, which is different from the first place; and an abnormality detection step of detecting an abnormality in the moving object. In the unmanned driving step, when a predetermined condition including detection of an abnormality of the moving object before the moving object arrives at the second place is satisfied, the moving object is moved to a third place in the factory, which is different from the first place and the second place, before the moving object arrives at the second place.

The unmanned driving method according to this aspect is capable of preventing the moving object having an abnormality from moving to the second place. Therefore, it is possible to prevent interference with the work at the second place.

(13) According to a fourth aspect of the present disclosure, a method for producing a moving object is provided. This method for producing a moving object comprises a first work step of performing a first work on a moving object at a first place in a factory; an unmanned driving step of moving the moving object by unmanned driving, and moving the moving object that has undergone the first work to a second place in the factory where a second work is performed; an abnormality detection step of detecting an abnormality in the moving object; and a second work step of performing the second work on the moving object at the second place. In the unmanned driving step, when a predetermined condition including detection of an abnormality of the moving object before the moving object arrives at the second place is satisfied, the moving object is moved to a third place in the factory, which is different from the first place and the second place, before the moving object arrives at the second place.

The method for producing a moving object according to this aspect is capable of preventing the moving object having an abnormality from moving to the second place. Therefore, it is possible to prevent interference with the work at the second place.

(14) According to a fifth aspect of the present disclosure, a moving object is provided. This moving object comprises a control unit that performs unmanned driving of the moving object and moves the moving object from a first place in a factory where the moving object is produced to a second place in the factory, which is different from the first place; and an information acquisition unit that acquires information regarding abnormality in the moving object. When a predetermined condition including acquisition of information indicating that the moving object has an abnormality before the moving object arrives at the second place is satisfied, the control unit moves the moving object to a third place in the factory, which is different from the first place and the second place, before the moving object arrives at the second place.

With the moving object according to this aspect, the moving object having an abnormality is prevented from moving to the second place. Therefore, it is possible to prevent interference with the work at the second place.

The present disclosure may also be realized in various aspects other than the unmanned driving system, the control device, the unmanned driving method, the method for producing a moving object, and the moving object. For example, the present disclosure may also be realized in aspects as a moving object production system, a computer program, a storage medium storing a computer program, and the like.

BRIEF DESCRIPTION OF THE DRAWINGS

Fig. 1A is an explanatory view of a structure of an unmanned driving system of a first embodiment;
Fig. 1B is an explanatory view of a structure of a vehicle control device of the first embodiment;
Fig. 2A is an explanatory view of a structure of a factory;
Fig. 2B is a flowchart of procedures of running control for a vehicle of the first embodiment;
Fig. 3 is a flowchart of contents of a running plan modification process;
Fig. 4 is a first explanatory view of a state in which a vehicle runs by remote control;
Fig. 5 is a second explanatory view of a state in which a vehicle runs by remote control;
Fig. 6 is a third explanatory view of a state in which a vehicle runs by remote control;
Fig. 7 is a fourth explanatory view of a state in which a vehicle runs by remote control;
Fig. 8 is an explanatory view of a structure of an unmanned driving system of a second embodiment;
Fig. 9 is an explanatory view of a structure of a vehicle control device of the second embodiment;
Fig. 10 is a flowchart of procedures of running control for a vehicle of the second embodiment; and
Fig. 11 is a flowchart of contents of running plan modification process of a third embodiment.

DETAILED DESCRIPTION

A. First Embodiment

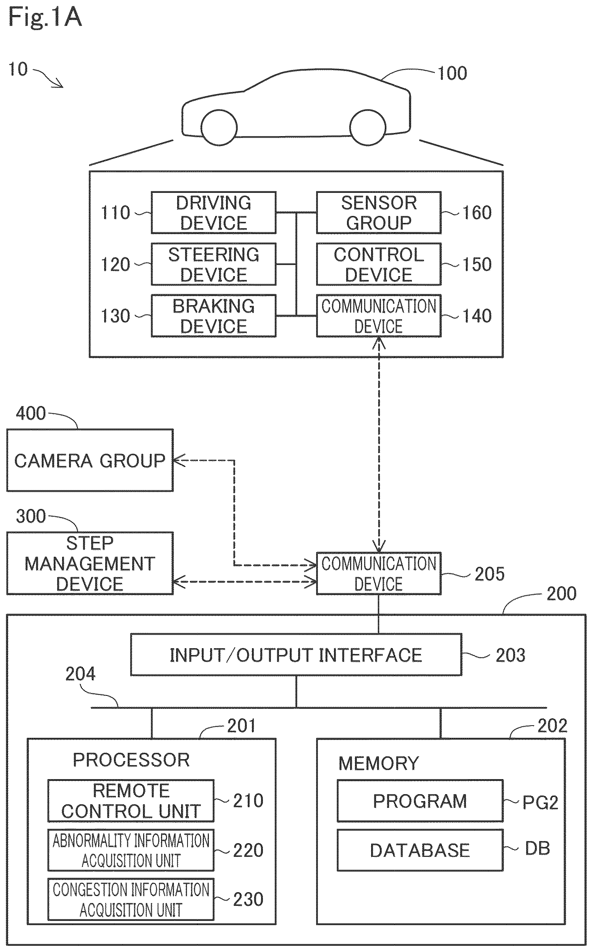

Fig. 1A is an explanatory view of a structure of an unmanned driving system 10 according to the first embodiment. The unmanned driving system 10 is used in factories for producing moving objects in order to move the moving objects by remote control.

In the present disclosure, the "moving object" means an object capable of moving, and is a vehicle or an electric vertical takeoff and landing aircraft (so-called flying-automobile), for example. The vehicle may be a vehicle to run with a wheel or may be a vehicle to run with a continuous track, and may be a passenger car, a truck, a bus, a two-wheel vehicle, a four-wheel vehicle, a construction vehicle, or a combat vehicle, for example. The vehicle includes a battery electric vehicle (BEV), a gasoline automobile, a hybrid automobile, and a fuel cell automobile. When the moving object is other than a vehicle, the term "vehicle" or "car" in the present disclosure is replaceable with a "moving object" as appropriate, and the term "run" is replaceable with "move" as appropriate.

The "unmanned driving" means driving independent of running operation by a passenger. The running operation means operation relating to at least one of "run," "turn," and "stop" of the vehicle 100. The unmanned driving is realized by automatic remote control or manual remote control using a device provided outside the vehicle 100 or by autonomous control by the vehicle 100. A passenger not involved in running operation may be onboard a vehicle running by the unmanned driving. The passenger not involved in running operation includes a person simply sitting in a seat of the vehicle 100 and a person doing work such as assembly, inspection, or operation of switches different from running operation while on-board the vehicle 100. Driving by running operation by a passenger may also be called "manned driving."

In the present specification, the "remote control" includes "complete remote control" by which all motions of the vehicle 100 are completely determined from outside the vehicle 100, and "partial remote control" by which some of the motions of the vehicle 100 are determined from outside the vehicle 100. The "autonomous control" includes "complete autonomous control" by which the vehicle 100 controls a motion of the vehicle 100 autonomously without receiving any information from a device outside the vehicle 100, and "partial autonomous control" by which the vehicle 100 controls a motion of the vehicle 100 autonomously using information received from a device outside the vehicle 100.

The unmanned driving system 10 includes a vehicle 100, which is a moving object, and a remote control device 200. In the present embodiment, the vehicle 100 is configured to enable itself to run by remote control. The vehicle 100 is configured as an electric vehicle. The vehicle 100 includes a driving device 110 for accelerating the vehicle 100, a steering device 120 for changing the traveling direction of the vehicle 100, a braking device 130 for decelerating the vehicle 100, a communication device 140 for enabling communication with the remote control device 200 via wireless communication, a vehicle control device 150 for controlling respective sections of the vehicle 100, and a sensor group 160 for detecting abnormalities in the vehicle 100. In the present embodiment, the driving device 110 includes a battery, a motor driven by electric power of the battery, and driving wheels rotated by the motor. The sensor group 160 is constituted of at least one sensor. The sensor group 160 includes, for example, a sensor for detecting abnormalities in the driving device 110, a sensor for detecting abnormalities in the steering device 120, a sensor for detecting abnormalities in the braking device 130, and the like.

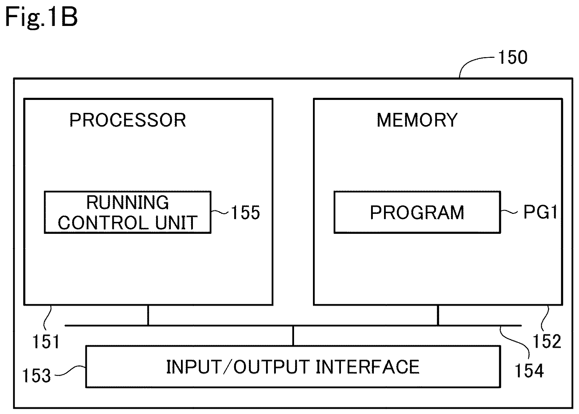

Fig. 1B is an explanatory view of a structure of the vehicle control device 150. The vehicle control device 150 is constituted of a computer with a processor 151, a memory 152, an input/output interface 153, and an internal bus 154. The processor 151, the memory 152, and the input/output interface 153 are connected via the internal bus 154 to enable bidirectional communication. The input/output interface 153 is connected to the driving device 110, the steering device 120, the braking device 130, the communication device 140, and the sensor group 160. The processor 151 functions as a running control unit 155 that executes running control of the vehicle 100 by executing a computer program PG1 stored in advance in the memory 152. The "running control" means, for example, such as adjusting the acceleration, speed, steering angle, and the like of the vehicle 100. The running control unit 155 enables the vehicle 100 to run by executing running control, in other words, by controlling the driving device 110, the steering device 120, and the braking device 130. When the vehicle 100 has a passenger, the running control unit 155 is capable of enabling the vehicle 100 to run by controlling the various devices 110 to 130 in response to operations by the passenger. In the present embodiment, the running control unit 155 is capable of enabling the vehicle 100 to run by controlling the various devices 110 to 130 in response to control commands received from the remote control device 200, regardless of whether or not the vehicle 100 has a passenger. The vehicle control device 150 may simply be referred to as a control device, and the running control unit 155 may simply be referred to as a control unit.

The remote control device 200 shown in Fig. 1A is a control device for enabling remote control of the vehicle 100. The remote control device 200 is constituted of a computer with a processor 201, a memory 202, an input/output interface 203, and an internal bus 204. The processor 201, the memory 202, and the input/output interface 203 are connected via the internal bus 204 to enable bidirectional communication. The input/output interface 203 is connected to a communication device 205 for enabling communication with the vehicle 100 via wireless communication. A computer program PG2 and a database DB are stored in the memory 202. The database DB stores the type of abnormality in the vehicle 100, whether or not the abnormality is within an acceptable safety range, the transfer destination of the vehicle 100 having the abnormality, the upper limit of the speed, and the upper limit of the acceleration, which are associated with each other.

The processor 201 functions as a remote control unit 210, an abnormality information acquisition unit 220, and a congestion information acquisition unit 230 by executing the computer program PG2. The remote control unit 210 enables the vehicle 100 to run by remote control of the vehicle 100. The abnormality information acquisition unit 220 acquires information regarding abnormalities in the vehicle 100 detected by using the sensor group 160 and information regarding abnormalities in the vehicle 100 detected by using a camera group 400 provided in the factory. In the present embodiment, the communication device 205 is capable of communication with a step management device 300 and cameras CM1 to CM5, which are described later, via wired or wireless communication. The step management device 300 is a computer for managing various types of information regarding the production steps of the vehicle 100 in the factory. The abnormality information acquisition unit 220 is capable of acquiring information regarding abnormalities in the vehicle 100 from the step management device 300. The congestion information acquisition unit 230 acquires information regarding a congestion level of the place where the vehicle 100 is to be repaired from the step management device 300. The remote control device 200 may also be simply referred to as a control device, the remote control unit 210 may also be simply referred to as a control unit, and the abnormality information acquisition unit 220 and the congestion information acquisition unit 230 may also be simply referred to as an information acquisition unit.

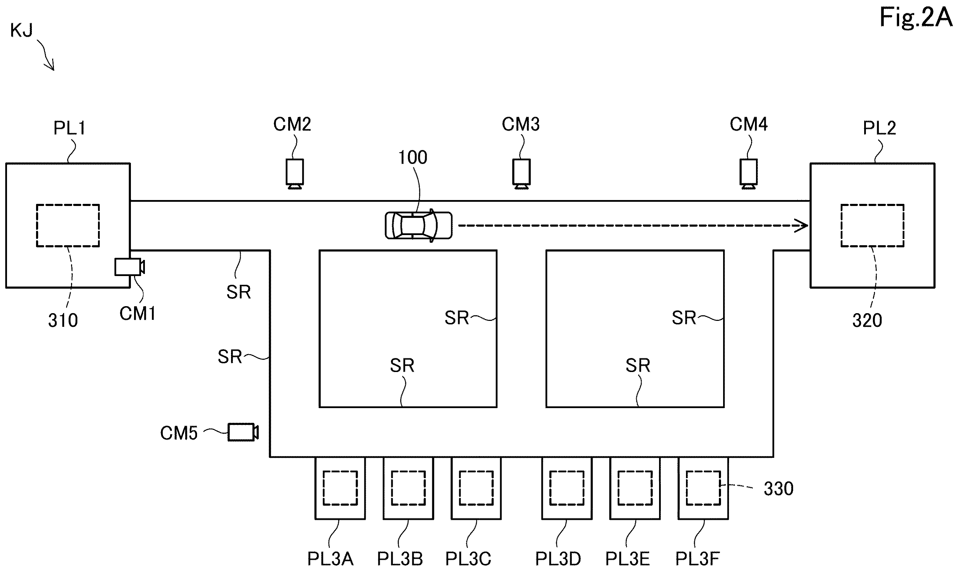

Fig. 2A is an explanatory view that schematically shows a structure of a factory KJ. The factory KJ has a first place PL1 where a first work is performed, a second place PL2 where a second work is performed, and a plurality of third places PL3A to PL3F where a third work is performed. The places PL1 to PL3F are connected to one another via a track SR on which the vehicle 100 can run. In the present embodiment, the first work is to assemble the vehicle 100, and the first place PL1 has an assembly equipment 310 as an equipment for assembling the vehicle 100. The second work is to inspect the vehicle 100, and the second place PL2 has an inspection equipment 320 as an equipment for inspecting the vehicle 100. The third work is to repair the vehicle 100, i.e., to address abnormalities in the vehicle 100, and each of the third places PL3A to PL3F has a repair equipment 330 as an equipment for repairing the vehicle 100. The places PL1 to PL3F may be located in the same building or in different buildings in the same property. The places PL1 to PL3F may be located outdoors instead of indoors. The places PL1 to PL3F may be distributed across multiple properties. For example, the places PL1 to PL3F may be provided by being distributed in the first and second factories, which are adjacent to each other with a public or private road between them. In this case, the first and second factories together are referred to as the factory KJ, and the track SR may partially include a public road or a private road.

Fig. 2A illustrates the vehicle 100 running on the track SR by remote control using the remote control unit 210. Referring to Fig. 2A, the following provides a brief description of a method of causing the vehicle 100 to run by remote control using the remote control unit 210. First, the remote control unit 210 determines a target route for allowing the vehicle 100 to run to its destination along the track SR. In the present embodiment, the target route corresponds to, for example, the reference route, which is described later. In the factory KJ, a plurality of cameras CM1 to CM5 for capturing images of the track SR are provided. These cameras CM1 to CM5 are included in the camera group 400. In the following description, when the cameras CM1 to CM5 are described without being distinguished from one another, the cameras CM1 to CM5 will be simply referred to as the camera CM. The remote control unit 210 can acquire the position and orientation of the vehicle 100 relative to the target route in real time by analyzing the video images captured by each of the cameras CM1 to CM5. The remote control unit 210 generates control commands for causing the vehicle 100 to run along the target route, and transmits the control commands to the vehicle 100. In the present embodiment, the control commands are, for example, running control signals, which are described later. The vehicle control device 150 mounted on the vehicle 100 controls the driving device 110, the steering device 120, and the braking device 130 according to the received control commands, thereby causing the vehicle 100 to run. In the present embodiment, the remote control unit 210 is capable of remote control of a plurality of vehicles 100 simultaneously and in parallel. In the case of performing remote control of a plurality of vehicles 100 simultaneously and in parallel, the remote control unit 210 transmits to each vehicle 100 a control command according to the target route and the current position and orientation of each vehicle 100. The method of causing the vehicle 100 to run by remote control may also be referred to as a remote automatic driving method or an unmanned driving method.

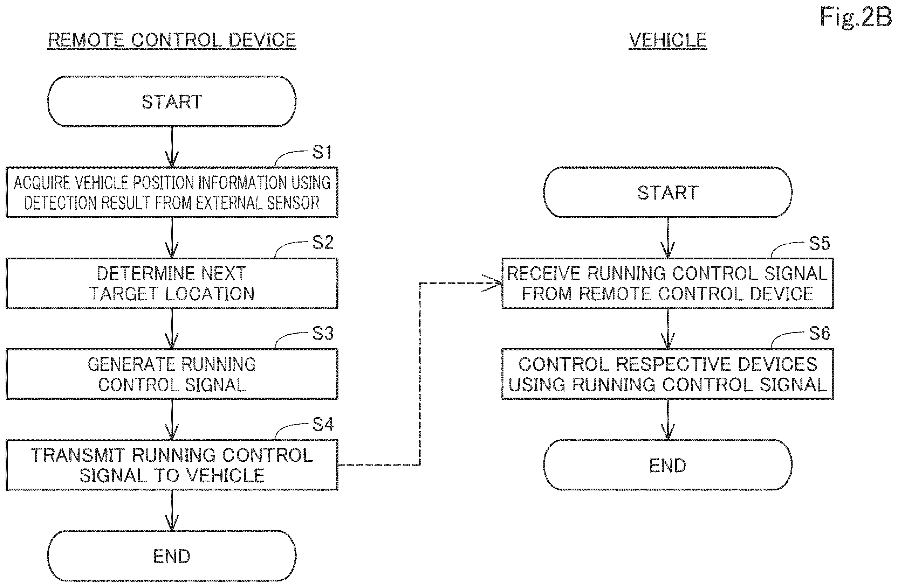

Fig. 2B is a flowchart of procedures of running control for the vehicle 100 in the first embodiment. Referring to Fig. 2B, the following provides a detailed description of a method of causing the vehicle 100 to run by remote control using the remote control unit 210 of the remote control device 200. In step S1, the remote control unit 210 acquires vehicle position information of the vehicle 100 using detection results output from an external sensor, which is a sensor located outside the vehicle 100. The vehicle position information is position information that serves as the basis for generating running control signals. In the present embodiment, the vehicle position information includes the position and orientation of the vehicle 100 in the reference coordinate system of the factory KJ. In the present embodiment, the reference coordinate system of the factory KJ is a global coordinate system, and any location in the factory KJ is expressed with X, Y, and Z coordinates in the global coordinate system. In the present embodiment, the external sensor is the camera CM, and the external sensor outputs a captured image as a detection result. That is, in step S1, the remote control unit 210 acquires the vehicle position information using captured images acquired from the camera CM, which is an external sensor.

More specifically, in step S1, the remote control unit 210 for example, determines the outer shape of the vehicle 100 from the captured image, calculates the coordinates of a positioning point of the vehicle 100 in a coordinate system of the captured image, namely, in a local coordinate system, and converts the calculated coordinates to coordinates in the global coordinate system, thereby acquiring the location of the vehicle 100. The outer shape of the vehicle 100 in the captured image may be detected by inputting the captured image to a detection model using artificial intelligence, for example. The detection model is prepared in the unmanned driving system 10 or outside the unmanned driving system 10. The detection model is stored in advance in the memory 202 of the remote control device 200, for example. An example of the detection model is a learned machine learning model that was learned so as to realize either semantic segmentation or instance segmentation. For example, a convolution neural network (CNN) learned through supervised learning using a learning dataset is applicable as this machine learning model. The learning dataset contains a plurality of training images including the vehicle 100, and a label showing whether each region in the training image is a region indicating the vehicle 100 or a region indicating a subject other than the vehicle 100, for example. In training the CNN, a parameter for the CNN is preferably updated through backpropagation in such a manner as to reduce error between output result obtained by the detection model and the label. The remote control unit 210 can acquire the orientation of the vehicle 100 through estimation based on the direction of a motion vector of the vehicle 100 detected from change in location of a feature point of the vehicle 100 between frames of the captured images using optical flow process, for example.

In step S2, the remote control unit 210 determines a target location to which the vehicle 100 is to move next. In the present embodiment, the target location is expressed by X, Y, and Z coordinates in the global coordinate system. The memory 202 of the remote control device 200 contains a reference route stored in advance as a route along which the vehicle 100 is to run. The route is expressed by a node indicating a departure place, a node indicating a way point, a node indicating a destination, and a link connecting nodes to each other. The remote control unit 210 determines the target location to which the vehicle 100 is to move next using the vehicle location information and the reference route. The remote control unit 210 determines the target location on the reference route ahead of a current location of the vehicle 100.

In step S3, the remote control unit 210 generates a running control signal for causing the vehicle 100 to run toward the determined target location. In the present embodiment, the running control signal includes an acceleration and a steering angle of the vehicle 100 as parameters. The remote control unit 210 calculates a running speed of the vehicle 100 from transition of the location of the vehicle 100 and makes comparison between the calculated running speed and a target speed of the vehicle 100 determined in advance. If the running speed is lower than the target speed, the remote control unit 210 generally determines an acceleration in such a manner as to accelerate the vehicle 100. If the running speed is higher than the target speed as, the remote control unit 210 generally determines an acceleration in such a manner as to decelerate the vehicle 100. If the vehicle 100 is on the reference route, remote control unit 210 determines a steering angle and an acceleration in such a manner as to prevent the vehicle 100 from deviating from the reference route. If the vehicle 100 is not on the reference route, in other words, if the vehicle 100 deviates from the reference route, the remote control unit 210 determines a steering angle and an acceleration in such a manner as to return the vehicle 100 to the reference route. In other embodiments, the running control signal may include the speed of the vehicle 100 as a parameter instead of or in addition to the acceleration of the vehicle 100.

In step S4, the remote control unit 210 transmits the generated running control signal to the vehicle 100. The remote control unit 210 repeats the acquisition of vehicle location information, the determination of a target location, the generation of a running control signal, the transmission of the running control signal, and others in a predetermined cycle.

In step S5, the vehicle control device 150 of the vehicle 100 receives the running control signal transmitted from the remote control device 200. In step S6, the vehicle control device 150 controls an actuator of the vehicle 100 using the received running control signal, thereby causing the vehicle 100 to run at the acceleration and the steering angle indicated by the running control signal. The vehicle control device 150 repeats the reception of a running control signal and the control over the actuator in a predetermined cycle. According to the unmanned driving system 10 in the present embodiment, it becomes possible to move the vehicle 100 without using a transport unit such as a crane or a conveyor.

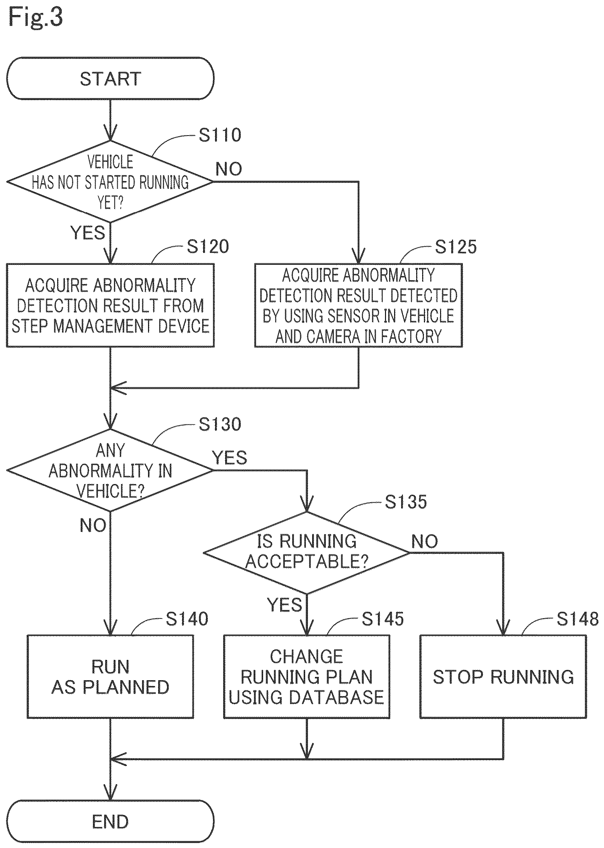

Fig. 3 is a flowchart of contents of a running plan modification process. The running plan modification process is repeatedly performed by the remote control unit 210 until the vehicle 100 as the target of remote control arrives at the second place PL2. In the following description, the vehicle 100 as the target of remote control is referred to as a target vehicle 100. When the running plan modification process is started, in step S110, the remote control unit 210 determines whether or not the target vehicle 100 has not yet started running. If it is determined in step S110 that the target vehicle 100 has not yet started running, in step S120, the abnormality information acquisition unit 220 acquires, from the step management device 300, information regarding abnormality in the target vehicle 100 detected in the first place PL1. If it is not determined in step S120 that the target vehicle 100 has not yet started running, in other words, if it is determined that the target vehicle 100 has already started running, in step S125, the abnormality information acquisition unit 220 acquires information regarding abnormality in the target vehicle 100 detected using the sensor group 160, as well as information regarding abnormality in the target vehicle 100 detected using the camera group 400.

In step S130, the remote control unit 210 determines whether or not the target vehicle 100 has an abnormality using the information regarding abnormality in the target vehicle 100. If it is determined in step S130 that there is no abnormality in the target vehicle 100, the remote control unit 210 causes the target vehicle 100 to run according to a predetermined running plan in step S140. The running plan defines the transfer destination, the upper limit of the speed, and the upper limit of the acceleration of the target vehicle 100. In the present embodiment, the transfer destination is the second place PL2. The remote control unit 210 moves the target vehicle 100 to the second place PL2 by remote control while keeping its speed and acceleration within the upper limits specified in the running plan.

If it is determined in step S130 that there is an abnormality in the target vehicle 100, in step S135, the remote control unit 210 determines whether or not the abnormality in the target vehicle 100 is within the acceptable safety range. In the present embodiment, the remote control unit 210 determines whether or not the abnormality in the target vehicle 100 is within the acceptable safety range using the database DB. The database DB stores in advance types of abnormality and whether or not each abnormality is within the acceptable safety range. Abnormalities that fall out of the acceptable safety range include, for example, abnormalities in the braking device 130 and insufficient tightening of torque for the battery fixing bolts. Abnormalities that fall within the acceptable safety range include, for example, scratches on the vehicle body and disconnection of the electric mirror. Although defective illumination of headlamps is an abnormality within the acceptable safety range during running under daylight, it falls out of the acceptable safety range during running at night.

If it is determined in step S135 that the abnormality in the target vehicle 100 is within the acceptable safety range, in step S145, the remote control unit 210 changes the running plan. In the present embodiment, the remote control unit 210 changes the running plan using the database DB. The modification of the running plan includes changes in the transfer destination, changes in the upper limit of the speed, and changes in the upper limit of the acceleration. The database DB stores information in which each type of abnormality in the vehicle 100 is associated with a third place PL3 suitable for addressing the abnormality in the vehicle, and the remote control unit 210 determines the transfer destination of the target vehicle 100 from among a plurality of third places PL3A to PL3F according to the type of abnormality in the target vehicle 100. However, if the running of the target vehicle 100 can be continued without any problems and the abnormality in the target vehicle 100 is irrelevant to the inspection in the second place PL2, the remote control unit 210 does not change the transfer destination of the target vehicle 100 from the second place PL2. In the present embodiment, such an abnormality that causes no problems in the running of the target vehicle 100 and that is irrelevant to the inspection in the second place PL2 may be, for example, defective paint on the vehicle body, scratches on the vehicle body, or the like. In this case, the remote control unit 210 moves the target vehicle 100 to the third place PL3 after the second work is performed on the target vehicle 100 at the second place PL2. After the target vehicle 100 is inspected at the second place PL2, the target vehicle 100 is repaired at the third place PL3. In the present embodiment, a plurality of reference routes are stored in the memory 202. In the case where the transfer destination of the vehicle 100 is changed, the remote control unit 210 determines a reference route which is used as a new target route for the vehicle 100, according to the current location and the new transfer destination of the vehicle 100.

With regard to the modification in the transfer destination, in the present embodiment, the remote control unit 210 determines the transfer destination of the moving object from among the third places PL3A to PL3F according to the congestion level of the third places PL3A to PL3F indicated in the congestion information. Specifically, the remote control unit 210 determines the third place PL3 with the lowest congestion level as the transfer destination of the target vehicle 100, from among the third places PL3 where the abnormality in the target vehicle 100 can be addressed. The congestion level is expressed by the following formula (1).

$$Dc = (Nr + Nw)/Na \times 100 \ldots (1)$$

wherein Dc represents the congestion level of the third place PL3, Nr represents the number of the vehicles 100 being repaired at the third place PL3, Nw represents the number of the vehicles 100 waiting for repair at the third place PL3, and Na represents the number of the vehicles 100 that can be repaired at the same time at the third place PL3.

With regard to the changes in the upper limit of the speed and the upper limit of the acceleration, if there is defective illumination of headlamps, the upper limit of the speed of the target vehicle 100 is lowered because it is more difficult for the workers to recognize the approach of the target vehicle 100. If there is leakage of coolant, the remote control unit 210 increases the upper limit of the speed of the target vehicle 100 because leaving a leakage of coolant unattended for a long time will result in shortage of the coolant. If there is any defective fixation of vehicle parts, the remote control unit 210 decreases the upper limit of the acceleration of the target vehicle 100 because the part may fall off due to impact during acceleration or deceleration. If there is a failure in windshield installation, objects flying from the front may enter into the vehicle if the target vehicle 100 runs forward; therefore, the target vehicle 100 is turned around to run backward. After changing the running plan in step S145, the remote control unit 210 ends the running plan modification process.

If it is determined in step S135 that the abnormality in the target vehicle 100 falls out of the acceptable safety range, in step S148, the remote control unit 210 determines to stop the running of the target vehicle 100. If the determination to stop the running of the target vehicle 100 is made prior to the start of the running, the remote control unit 210 does not start running the target vehicle 100. If the determination to stop the running of the target vehicle 100 is made during the running, the remote control unit 210 stops the target vehicle 100. When the determination to stop the running is made, the target vehicle 100 is transported to the third place PL3 by workers or a towing vehicle. After the step S140, the step S145, or the step S148, the remote control unit 210 ends the running plan modification process.

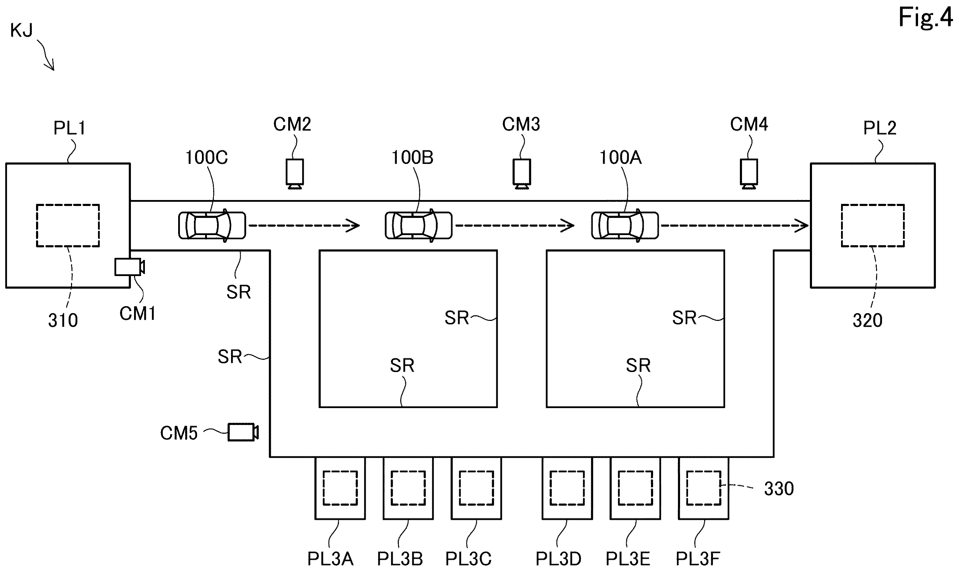

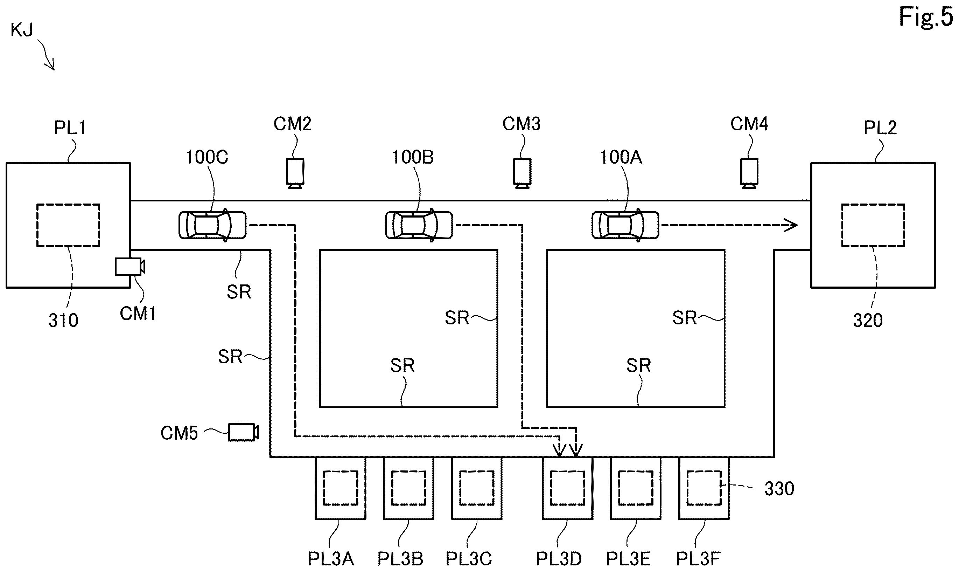

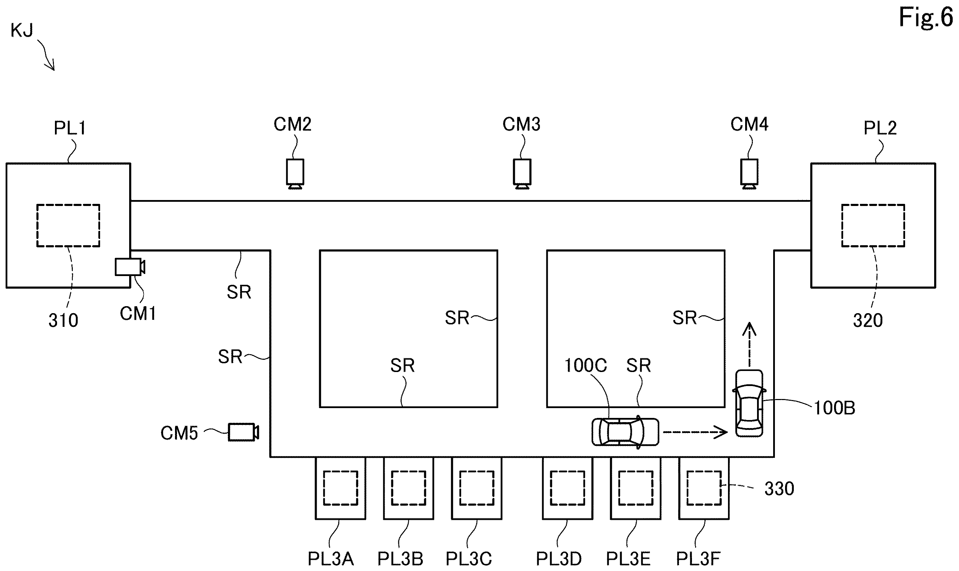

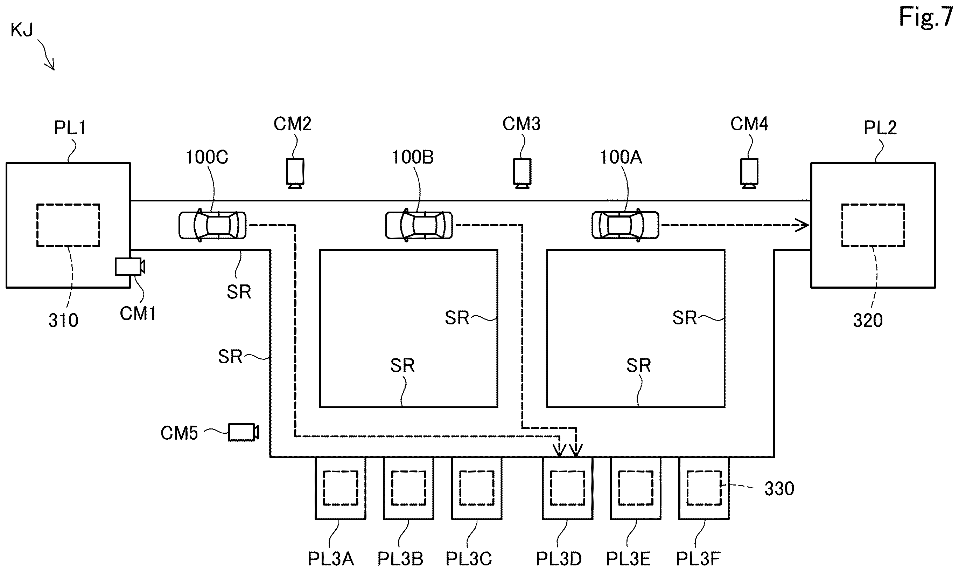

Fig. 4 is the first explanatory view of a state in which the vehicle 100 runs by remote control, Fig. 5 is the second explanatory view of a state in which the vehicle 100 runs by remote control, Fig. 6 is the third explanatory view of a state in which the vehicle 100 runs by remote control, and Fig. 7 is the fourth explanatory view of a state in which the vehicle 100 runs by remote control. Figs. 4 to 7 show a state in which three vehicles 100A to 100C run by simultaneous and parallel remote control.

The vehicles 100A to 100C having undergone the first work at the first place PL1 are ready to move by remote control. The state in which the vehicle 100 is capable of moving under remote control refers to a state in which the vehicle 100 is equipped with the driving device 110, the steering device 120, the braking device 130, the communication device 140, and the vehicle control device 150, so that the vehicle 100 is capable of exhibiting the three functions: running, turning, and stopping, by remote control. Therefore, at the time point when the first work is completed, at least some of the interior components, such as the driver's seat and dashboard, may not be installed in the vehicle 100, at least some of the exterior components, such as bumpers and fenders, may not be attached to the vehicle 100, and the vehicle 100 may not be equipped with a body shell.

As shown in Fig. 4, if no abnormality is detected from any of the vehicles 100A to 100C, the remote control unit 210 causes the vehicles 100A to 100C to run from the first place PL1 to the second place PL2 according to the original running plan. The vehicles 100A to 100C are completed as they have undergone the second work at the second place PL2.

As shown in Fig. 5, for example, if an abnormality is detected in the vehicles 100B and 100C, the remote control unit 210 changes the running plan for the vehicles 100B and 100C having an abnormality to cause the vehicles 100B and 100C to run toward the third place PL3. In this case, the remote control unit 210 may adjust at least one of the speed and acceleration of the vehicles 100B and 100C. For example, if there is defective illumination of headlamps, the remote control unit 210 causes the vehicles 100B and 100C to run at a speed lower than that when there is no such an abnormality. For example, if the type of the abnormality in the vehicles 100B and 100C is defective fixation of vehicle parts, the remote control unit 210 causes the vehicles 100B and 100C to run at an acceleration lower than that when there is no such an abnormality. The remote control unit 210 causes the vehicle 100A in which no abnormality is detected to run toward the second place PL2 according to the original running plan. The vehicle 100A is completed as it has undergone the second work at the second place PL2. Thereafter, as shown in Fig. 6, the remote control unit 210 restores the upper limit of the speed and the upper limit of the acceleration of the vehicles 100B and 100C having been repaired and then causes the vehicles 100B and 100C to run from the third place PL3 to the second place PL2. The vehicles 100B and 100C are completed as they have undergone the second work at the second place PL2.

As shown in Fig. 7, for example, if windshields are not installed in the vehicles 100B and 100C, the running plan for the vehicles 100B and 100C without windshields is changed so that the vehicles 100B and 100C run toward the third place PL3. In this case, the remote control unit 210 turns the vehicles 100B and 100C around and causes the vehicles 100B and 100C to run backward. The remote control unit 210 causes the vehicles 100B and 100C having been repaired to run forward from the third place PL3 to the second place PL2. The vehicles 100B and 100C are completed as they have undergone the second work at the second place PL2. The step of performing the first work on the vehicle 100 at the first place PL1 may be referred to as a first work step, and the step of performing the second work on the vehicle 100 at the second place PL2 may be referred to as a second work step. Further, the step of moving the vehicle 100 by unmanned driving such as remote control may be referred to as an unmanned driving step, and the step of detecting an abnormality in the vehicle 100 which has not arrived at the second place PL2 may be referred to as an abnormality detection step. The method of producing the vehicle 100 in the present embodiment includes the first work step, the unmanned driving step, the abnormality detection step, and the second work step.

According to the unmanned driving system 10 in the present embodiment described above, the vehicle 100 assembled at the first place PL1 can be moved by remote control to the second place PL2 where inspections are conducted, without using any transport device such as a crane or a conveyor. In particular, the present embodiment enables the vehicle 100 having an abnormality to move to the third place PL3 instead of the second place PL2 by remote control. Therefore, it is possible to avoid performing unnecessary steps of conducting inspections on the vehicle 100 in which an abnormality has already been found in advance. When the work performed at the second place PL2 is attachment of vehicle parts, it may not be possible to attach the parts to the vehicle 100 having an abnormality. Also in this case, according to the unmanned driving system 10, the vehicle 100 having an abnormality is moved to the third place PL3 instead of the second place PL2 by remote control, thereby preventing interference with the work of attaching parts to the vehicle.

Further, in the present embodiment, the vehicle 100 in which the abnormality has been addressed in the third place PL3 can be moved to the second place PL2 by remote control without using any transport devices such as a crane or a conveyor.

Further, in the present embodiment, since the remote control unit 210 determines the third place PL3 as the transfer destination from among a plurality of third places PL3 by using the database DB in which the type of the abnormality is associated with the third place PL3, the vehicle 100 can be moved to a third place PL3 suitable for addressing the abnormality from among the plurality of third places PL3. Therefore, the abnormality in the vehicle 100 can be addressed smoothly.

Further, in the present embodiment, when the remote control unit 210 moves the vehicle 100 to the third place PL3, the remote control unit 210 determines the transfer destination of the vehicle 100 according to the congestion level of the third place PL3. This eliminates waiting time for repairs.

Further, in the present embodiment, the remote control unit 210 changes the upper limit of the speed of the vehicle 100 and the upper limit of the acceleration of the vehicle 100 when there is an abnormality in the vehicle 100. This prevents occurrence of more severe abnormalities in the vehicle 100. It is also possible to increase the safety in running the vehicle 100.

In addition, in the present embodiment, in the case where no windshield is installed in the vehicle 100, the remote control unit 210 causes the vehicle 100 to run backward, thereby preventing objects flying from the front of the vehicle from entering into the vehicle.

B. Second Embodiment

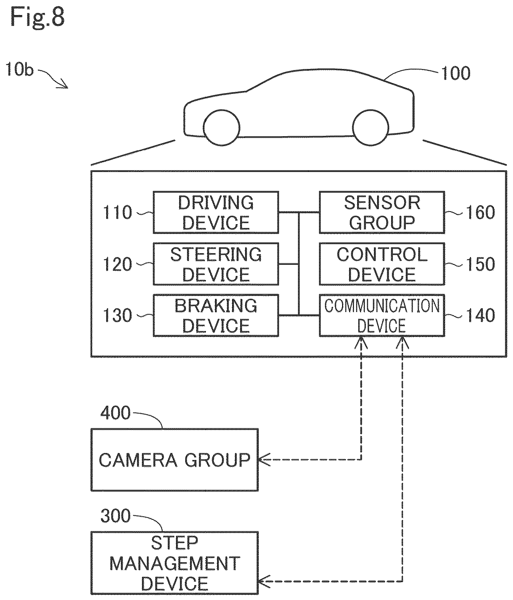

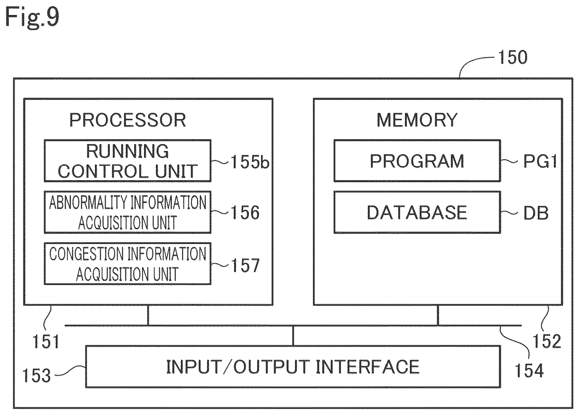

Fig. 8 is an explanatory view that schematically shows a structure of an unmanned driving system 10b according to the second embodiment. Fig. 9 is an explanatory view of a structure of a vehicle control device 150 according to the second embodiment. As shown in Fig. 8, the second embodiment differs from the first embodiment in that the unmanned driving system 10b does not have the remote control device 200, and that the vehicle 100 runs by autonomous control instead of remote control. Other structures are the same as those in the first embodiment, unless otherwise specified. The method of causing the vehicle 100 to run by autonomous control may also be referred to as an autonomous automatic driving method or an unmanned driving method.

In the present embodiment, the vehicle 100 is configured to be capable of running by autonomous control. The vehicle 100 is capable of communication with the step management device 300 and the camera CM by wireless communication using the communication device 140. As shown in Fig. 9, in the present embodiment, the processor 151 of the vehicle control device 150 functions as the running control unit 155b, the abnormality information acquisition unit 156, and the congestion information acquisition unit 157 by executing the computer program PG1 stored in advance in the memory 152. In the present embodiment, the running control unit 155b generates the running control signals by itself, and controls the driving device 110, the steering device 120, and the braking device 130 to cause the vehicle 100 to run by using the generated running control signals. The abnormality information acquisition unit 156 acquires information regarding abnormalities in the own vehicle in the same manner as in the abnormality information acquisition unit 220 of the remote control device 200 shown in Fig. 1A. The abnormality information acquisition unit 156 acquires, for example, information regarding abnormalities in the own vehicle detected using the sensor group 160 and the camera group 400. The abnormality information acquisition unit 156 may acquire information regarding abnormalities in the own vehicle from the step management device 300. The congestion information acquisition unit 157 acquires information regarding a congestion level of the place where the vehicle 100 is to be repaired from the step management device 300 in the same manner as in the congestion information acquisition unit 230 of the remote control device 200 shown in Fig. 1A. The memory 152 stores the database DB, the reference route, the detection model, and the like, in advance. In this embodiment, the running plan modification process shown in Fig. 3 is executed by the processor 151 of the vehicle control device 150. The running control unit 155b may be referred to simply as a control unit. The abnormality information acquisition unit 156 and the congestion information acquisition unit 157 may also be simply referred to as an information acquisition unit.

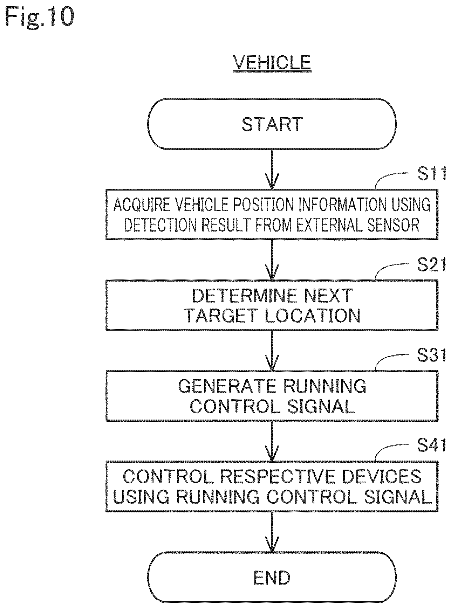

Fig. 10 is a flowchart of procedures of running control for the vehicle 100 in the second embodiment. In step S11, the running control unit 155b of the vehicle control device 150 acquires vehicle position information using the detection results output from the camera CM, which is an external sensor. In step S21, the running control unit 155b determines the target location to which the vehicle 100 should go next. In step S31, the running control unit 155b generates a running control signal for causing the vehicle 100 to run toward the determined target location. In step S41, the running control unit 155b controls the driving device 110, the steering device 120, and the braking device 130 using the generated running control signal, thereby causing the vehicle 100 to run according to the parameters indicated by the running control signal. The running control unit 155b repeats the acquisition of the vehicle position information, the determination of the target location, the generation of the running control signal, and the control of the devices 110 to 130, in a predetermined cycle.

According to the unmanned driving system 10b in the present embodiment described above, the vehicle 100 having an abnormality can be moved to the third place PL3 instead of the second place PL2 by autonomous control. Therefore, it is possible to avoid performing unnecessary steps of conducting inspections on the vehicle 100 in which an abnormality has already been found in advance.

C. Third Embodiment

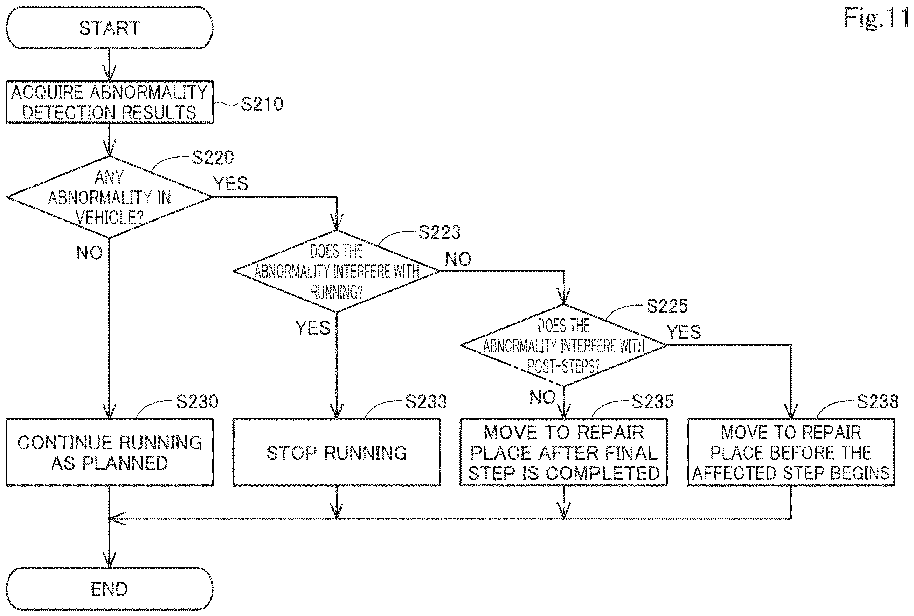

Fig. 11 is a flowchart of contents of a running plan modification process in a third embodiment. In the third embodiment, the contents of the running plan modification process differ from those of the first embodiment. Other structures are the same as those in the first embodiment, unless otherwise specified.

The running plan modification process shown in Fig. 11 is repeated in a predetermined cycle by the processor 201 of the remote control device 200. In step S210, the abnormality information acquisition unit 220 acquires information regarding abnormalities in the target vehicle 100. If the target vehicle 100 has not yet started running, the abnormality information acquisition unit 220 acquires, from the step management device 300, information regarding abnormalities in the target vehicle 100 detected in the first place PL1. If the target vehicle 100 is running, the abnormality information acquisition unit 220 acquires information regarding abnormalities in the target vehicle 100 detected by using the sensor group 160 and information regarding abnormalities in the target vehicle 100 detected by using the camera group 400.

In step S220, the remote control unit 210 determines whether the target vehicle 100 has an abnormality using the information regarding abnormalities in the target vehicle 100 acquired by the abnormality information acquisition unit 220. If it is determined in step S220 that there is no abnormality in the target vehicle 100, the remote control unit 210 causes the target vehicle 100 to run according to a predetermined running plan in step S230.

If it is determined in step S220 that there is an abnormality in the target vehicle 100, in step S223, the remote control unit 210 determines whether the abnormality occurring in the target vehicle 100 is an abnormality that interferes with the running of the target vehicle 100. Abnormalities that interfere with the running of the target vehicle 100 include those that interfere with the "running," "turning," or "stopping" of the target vehicle 100. Abnormalities that interfere with the running of the target vehicle 100 include, for example, abnormalities E1 to E2, which are described later. In the present embodiment, the remote control unit 210 determines whether the target vehicle 100 has an abnormality according to predetermined rules. The remote control unit 210 may determine whether the target vehicle 100 has an abnormality in a flexible manner depending on the situation.

If it is determined in step S223 that the abnormality occurring in the target vehicle 100 interferes with the running of the target vehicle 100, in step S233, the remote control unit 210 determines to stop the running of the target vehicle 100. If the determination to stop the running of the target vehicle 100 is made prior to the start of the running of the target vehicle 100, the remote control unit 210 does not start running the target vehicle 100. If the determination to stop the running of the target vehicle 100 is made during the running of the target vehicle 100, the remote control unit 210 stops the target vehicle 100. In the present embodiment, the remote control unit 210 further notifies, for example, the administrator of the unmanned driving system 10 and the workers in the factory KJ, that the running of the target vehicle 100 has been stopped. In the following description, the administrator of the unmanned driving system 10, the workers in the factory KJ, and the like, are referred to as "administrator and the like". The remote control unit 210 notifies that the running of the target vehicle 100 has been stopped, for example, by transmitting a message to a mobile terminal carried by the administrator and the like. The remote control unit 210 may also notify that the running of the target vehicle 100 has been stopped by activating a warning buzzer or a warning lamp provided in the factory KJ. In other embodiments, if it is determined that the abnormality interferes with the running of the target vehicle 100 in step S223, the remote control unit 210 may change the running plan and move the target vehicle 100 to the nearest repair place from the current location without stopping the running of the target vehicle 100.

If it is determined in step S223 that the abnormality does not interfere with the running of the target vehicle 100, in step S225, the remote control unit 210 determines whether the abnormality occurring in the target vehicle 100 is an abnormality that interferes with the post-steps for the target vehicle 100. Abnormalities that interfere with the post-steps for the target vehicle 100 include, for example, abnormalities that prevent the post-steps from being performed and abnormalities that decrease the workability of the post-steps. Abnormalities that interfere with the post-steps for the target vehicle 100 include, for example, abnormality E3, which is described later.

If it is determined in step S225 that the abnormality does not interfere with the post-steps for the target vehicle 100, in step S235, the remote control unit 210 changes the running plan of the target vehicle 100, and moves the target vehicle 100 to the final step and then moves the target vehicle 100 to the repair place. In other embodiments, the remote control unit 210 may move the target vehicle 100 to the repair place not after moving the target vehicle 100 to the final step but before moving the target vehicle 100 to the final step. For example, if the running plan is to cause the target vehicle 100 to make a U-turn on the halfway of the running, the remote control unit 210 may move the target vehicle 100 to the repair place at the timing when the vehicle 100 makes the U-turn. If the running plan involves platooning of a plurality of vehicles 100 until the halfway through the route, the remote control unit 210 may move the vehicle 100 having the abnormality to the repair place at the timing when the platooning ends, and move the vehicles 100 without abnormality to the destination as originally planned in the running plan.

If it is determined in step S225 that the abnormality interferes with the post-steps for the target vehicle 100, in step S238, the remote control unit 210 moves the target vehicle 100 to the repair place before the affected step is started. Assuming that an Nth (N is a natural number) step is expected to be affected by the abnormality, the remote control unit 210 may move the target vehicle 100 to the repair place during the period between the end of an (N-1)th step and the start of the Nth step, or may move the target vehicle 100 to the repair place before the (N-1)th step is started.

After the step S230, the step S233, the step S235, or the step S238, the remote control unit 210 ends the running plan modification process. After a predetermined time has elapsed, the remote control unit 210 starts the running plan modification process again.

Abnormalities that interfere with the running of the target vehicle 100 include, for example, the following abnormalities E1 to E2.

Abnormality E1: high misfire count of engine

If the target vehicle 100 is a gasoline or hybrid vehicle and an abnormality E1, which is a high misfire count of the engine, occurs in the target vehicle 100, there is a risk that the target vehicle 100 may become unable to run. Therefore, the remote control unit 210 either stops running of the target vehicle 100 or moves the target vehicle 100 to the nearest repair place from the current location.

Abnormality E2: insufficient tightening torque for battery

If an abnormality E2, which is an abnormality in which the tightening torque to secure the battery is insufficient, occurs in the target vehicle 100, there is a risk that the battery will come off, causing the target vehicle 100 to become unable to run. Therefore, the remote control unit 210 either stops running of the target vehicle 100 or moves the target vehicle 100 to the nearest repair place from the current location.

Abnormalities that interfere with the post-steps for the target vehicle 100 include, for example, the following abnormality E3.

Abnormality E3: disconnection of mirror

If, prior to an adjustment step involving the adjustment of the electrically-retractable mirror, an abnormality E3, which is disconnection of the electrically-retractable mirror, occurs in the target vehicle 100, although it will not interfere with the running, the adjustment cannot be performed with the mirror being disconnected. Therefore, the remote control unit 210 moves the target vehicle 100 to the repair place before the adjustment step is started. If the abnormality E3, i.e., the disconnection of the electrically-retractable mirror, occurs in the target vehicle 100 after the adjustment step, although it does not interfere with the running or the post-steps for the target vehicle 100, the target vehicle 100 cannot be shipped in such a state. Therefore, the remote control unit 210 moves the target vehicle 100 to the repair place after the final step is completed.

Abnormalities that do not interfere with the post-steps for the target vehicle 100 include, for example, the following abnormality E4.

Abnormality E4: scratches on mirrors, etc.

If there is an abnormality E4, which is the presence of scratches on the mirrors or the body of the target vehicle 100, although it does not interfere with the running of the target vehicle 100 or the post-steps for the target vehicle 100, the target vehicle 100 cannot be shipped in such a state. Therefore, the remote control unit 210 moves the target vehicle 100 to the repair place after the final step is completed. If the target vehicle 100 is moved to the repair place at a timing when the repair place is crowded, the waiting time for the repair of the target vehicle 100 to start will increase. Therefore, instead of moving the target vehicle 100 to the repair place after the final step is completed, the remote control unit 210 may move the target vehicle 100 to the repair place at a timing when the repair place is not crowded before the final step is completed. In this case, it is possible to reduce the waiting time for the repair of the target vehicle 100 to start after the arrival of the target vehicle 100 at the repair place. In addition, if there is a delay in the next step, the waiting time for the next step to start may become even longer. Therefore, the remote control unit 210 may move the target vehicle 100 to the repair place at a timing of occurrence of delay in the next step. In this case, the waiting time for the next step to start can be effectively utilized.

The following describes a process when an abnormality other than the abnormalities E1 to E4 described above occurs. As an example, the following describes a process when defective assembly of parts occurs in the target vehicle 100. The expression "defective assembly of parts" here includes not only assembly of parts in an improper state but also omission of assembly of parts.

If there is defective assembly of parts in the target vehicle 100 and the defective assembly of parts interferes with the running of the target vehicle 100, the remote control unit 210 either stops running of the target vehicle 100 or move the target vehicle 100 to the nearest repair place from the current location. For example, if the running of the target vehicle 100 is unstable due to the defective assembly of parts, there is an interference with the running of the target vehicle 100, and thus the remote control unit 210 either stops running of the target vehicle 100 or move the target vehicle 100 to the nearest repair place from the current location.

If there is defective assembly of parts that does not interfere with the running of the target vehicle 100 and this defective assembly of parts interferes with the post-steps, the remote control unit 210 moves the target vehicle 100 to the repair place before the affected step is started. In contrast, if there is defective assembly of parts that does not interfere with the running of the target vehicle 100 and this defective assembly of parts does not interfere with the post-steps, the remote control unit 210 moves the target vehicle 100 to the repair place after the final step is completed.

If there is defective assembly of parts in the target vehicle 100 but this defective assembly of parts does not interfere with the running of the target vehicle 100 and can be easily fixed by post-step workers, the remote control unit 210 may continue running of the target vehicle 100 according to the initial running plan. For example, if parts are not properly fitted into the target vehicle 100 but the parts can be properly fitted into the target vehicle 100 by being pushed by a post-step worker by hand, the remote control unit 210 may continue running of the target vehicle 100 according to the initial running plan. In this case, the remote control unit 210 preferably notifies the post-step worker to fix the defective assembly in the target vehicle 100.

The post-steps described above include not only the assembly step of the target vehicle 100 but also the inspection step of the target vehicle 100. The inspection step includes, for example, a water resistance inspection step. In the water resistance inspection step, water is sprayed onto a predetermined range of the target vehicle 100 to inspect whether the water enters the interior of the target vehicle 100. If the weatherstrips are not properly assembled to the doors and window frames of the target vehicle 100, water may enter the interior of the target vehicle 100 during the water resistance inspection step. Therefore, if defective assembly of the weatherstrip is found before the water resistance inspection step is started, the remote control unit 210 moves the target vehicle 100 to the repair place before the water resistance inspection step is started.

According to the unmanned driving system 10 of the present embodiment described above, in the running plan modification process, when it is determined that the target vehicle 100 has an abnormality, the remote control unit 210 determines the transfer destination of the target vehicle 100 depending on whether the abnormality occurring in the target vehicle 100 interferes with the post-steps for the target vehicle 100. Therefore, it is possible to prevent the production efficiency of the target vehicle 100 from decreasing due to such an event that the transfer destination is changed even though the abnormality occurring in the target vehicle 100 does not interfere with the post-steps for the target vehicle 100. The running plan modification process shown in Fig. 11 may be executed by the processor 151 of the vehicle control device 150.

In the running plan modification process, the remote control unit 210 may change the transfer destination of the target vehicle 100 not only when an abnormality actually occurs, but also when there is a possibility of occurrence of an abnormality. If it is unclear whether the target vehicle 100 actually has an abnormality but there is a possibility that the target vehicle 100 has an abnormality, the remote control unit 210 may change the transfer destination of the target vehicle 100 to a special inspection place instead of a repair place. For example, if it is found that water leakage may occur in the target vehicle 100 in the water resistance inspection before the Nth (N is a natural number) step is started, the remote control unit 210 may change the transfer destination of the target vehicle 100 from the location where the Nth step is performed to a special inspection place to examine whether water leakage occurs. If the target vehicle 100 does not pass the inspection at the special inspection place, in other words, if the target vehicle 100 is found to have an abnormality, the remote control unit 210 may move the target vehicle 100 to a repair place. If the target vehicle 100 passes the inspection at the special inspection place, in other words, if the target vehicle 100 is found to have no abnormalities, the remote control unit 210 may move the target vehicle 100 to the location where the Nth step is performed.

In the present disclosure, abnormalities occurring in the target vehicle 100 may include the fact that the target vehicle 100 is not in compliance with the laws and regulations of the receiving end. The non-compliance of the target vehicle 100 with the laws and regulations of the receiving end may include the fact that the target vehicle 100 no longer complies with the laws and regulations of the receiving end due to a change in the laws and regulations of the receiving end.

In the present disclosure, abnormalities occurring in the target vehicle 100 may include the possibility that the target vehicle 100 may fail an inspection due to a change in the criteria for passing inspections of the target vehicle 100. For example, if the criteria for passing the inspections are changed after the completion of the inspections of the target vehicle 100 before shipping of the target vehicle 100, it is necessary to redo the inspections of the target vehicle 100 stored in the yard in the factory KJ. In this case, the remote control unit 210 may move the target vehicle 100 stored in the yard to the location where the target vehicle 100 goes through the inspection again. This will eliminate the need for inspectors to travel to the yard.

In the present disclosure, the running of the target vehicle 100 by remote control may be performed not at the factory KJ where the target vehicle 100 is produced, but, for example, at the harbor where the target vehicle 100 is loaded onto the ship. As an example, the remote control unit 210 may move the target vehicle 100 to the ship if there is no abnormality in the target vehicle 100, and may move the target vehicle 100 to a repair place in the harbor if there is an abnormality in the target vehicle 100. As another example, the remote control unit 210 may move the target vehicle 100 to a first ship for shipping if there is no abnormality in the target vehicle 100, and may move the target vehicle 100 to a second ship bound for a repair place if there is an abnormality in the target vehicle 100.

D. Alternative Embodiments

(D1) In the unmanned driving systems 10, 10b in each embodiment described above, the remote control unit 210 and the running control unit 155b move the vehicle 100 that has undergone the third work at the third place PL3 to the second place PL2. In contrast, the remote control unit 210 and the running control unit 155b may move the vehicle 100 that has undergone the third work at the third place PL3 to a place other than the second place PL2. Alternatively, the remote control unit 210 and the running control unit 155b may not have to move the vehicle 100 that has undergone the third work at the third place PL3 from the third place PL3. Also in this embodiment, it is possible to avoid performing unnecessary steps of conducting inspections on the vehicle 100 in which the possibility of an abnormality has already been found in advance.

(D2) In the unmanned driving systems 10, 10b in each embodiment described above, the remote control unit 210 and the running control unit 155b move the vehicle 100 to the second place PL2 from the first place PL1. In contrast, for example, after the vehicle 100 is transported from the first place PL1 to a place between the first place PL1 and the second place PL2 by a transport device, such as a conveyor or a crane, the remote control unit 210 and the running control unit 155b may move the vehicle 100 to the second place PL2 from the place between the first place PL1 and the second place PL2.

(D3) In the unmanned driving systems 10, 10b in each embodiment described above, the remote control unit 210 and the running control unit 155b determine a third place PL3 as the transfer destination of the vehicle 100 from among a plurality of third places PL3 using the database DB in which each type of the abnormality and the third place PL3 are associated with each other. In contrast, for example, the remote control unit 210 and the running control unit 155b may determine the third place PL3 closest to the current location of the vehicle 100 as the transfer destination of the vehicle 100 without using the database DB.

(D4) In each of the embodiments described above, the factory KJ has a plurality of third places PL3. In contrast, the factory KJ may have only one third place PL3. In this case, the remote control unit 210 and the running control unit 155b may determine the transfer destination of the vehicle 100 without using the database DB.

(D5) In each embodiment described above, the remote control unit 210 and the running control unit 155b may move the vehicle 100 from the first place PL1 to the second place PL2 via a fourth place where a fourth work is performed. In this case, the remote control unit 210 and the running control unit 155b may move the vehicle 100 having an abnormality from the first place PL1 to the fourth place via the third place PL3 and then move the vehicle 100 from the fourth place to the second place PL2. Alternatively, the remote control unit 210 and the running control unit 155b may move the vehicle 100 from the first place PL1 to the fourth place and then move the vehicle 100 from the fourth place to the second place PL2 via the third place PL3. For example, if the second work performed at the second place PL2 is to inspect the water resistance of the vehicle 100 by pouring water on the vehicle 100, and the fourth work performed at the fourth place is to inspect scratches, etc. of the vehicle 100 without pouring water on the vehicle 100, the fourth work can be performed without any problem even if there is an abnormality that hinders window closing in the vehicle 100. Therefore, if an abnormality that hinders closing of the window of the vehicle 100 is detected before the vehicle 100 arrives at the fourth place, the remote control unit 210 and the running control unit 155b may first move the vehicle 100 from the first place PL1 to the fourth place and then move the vehicle 100 from the fourth place to the second place PL2 via the third place PL3.

(D6) In each of the above-described embodiments, the external sensor is not limited to the camera but may be the distance measuring device, for example. The distance measuring device is a light detection and ranging (LiDAR) device, for example. In this case, detection result output from the external sensor may be three-dimensional point cloud data representing the vehicle 100. The remote control device 200 and the vehicle 100 may acquire the vehicle location information through template matching using the three-dimensional point cloud data as the detection result and reference point cloud data, for example.

(D7) In the above-described first embodiment, the remote control device 200 performs the processing from acquisition of vehicle location information to generation of a running control signal. By contrast, the vehicle 100 may perform at least part of the processing from acquisition of vehicle location information to generation of a running control signal. For example, embodiments (1) to (3) described below are applicable, for example.

(1) The remote control device 200 may acquire vehicle location information, determine a target location to which the vehicle 100 is to move next, and generate a route from a current location of the vehicle 100 indicated by the acquired vehicle location information to the target location. The remote control device 200 may generate a route to the target location between the current location and a destination or generate a route to the destination. The remote control device 200 may transmit the generated route to the vehicle 100. The vehicle 100 may generate a running control signal in such a manner as to cause the vehicle 100 to run along the route received from the remote control device 200 and control an actuator using the generated running control signal.

(2) The remote control device 200 may acquire vehicle location information and transmit the acquired vehicle location information to the vehicle 100. The vehicle 100 may determine a target location to which the vehicle 100 is to move next, generate a route from a current location of the vehicle 100 indicated by the received vehicle location information to the target location, generate a running control signal in such a manner as to cause the vehicle 100 to run along the generated route, and control an actuator using the generated running control signal.

(3) In the foregoing embodiments (1) and (2), an internal sensor may be mounted on the vehicle 100, and detection result output from the internal sensor may be used in at least one of the generation of the route and the generation of the running control signal. The internal sensor is a sensor mounted on the vehicle 100. More specifically, the internal sensor might include a camera, LiDAR, a millimeter wave radar, an ultrasonic wave sensor, a GPS sensor, an acceleration sensor, and a gyroscopic sensor, for example. For example, in the foregoing embodiment (1), the remote control device 200 may acquire detection result from the internal sensor, and in generating the route, may reflect the detection result from the internal sensor in the route. In the foregoing embodiment (1), the vehicle 100 may acquire detection result from the internal sensor, and in generating the running control signal, may reflect the detection result from the internal sensor in the running control signal. In the foregoing embodiment (2), the vehicle 100 may acquire detection result from the internal sensor, and in generating the route, may reflect the detection result from the internal sensor in the route. In the foregoing embodiment (2), the vehicle 100 may acquire detection result from the internal sensor, and in generating the running control signal, may reflect the detection result from the internal sensor in the running control signal.

(D8) In the above-described embodiment in which the vehicle 100 can be running by autonomous control, the vehicle 100 may be equipped with an internal sensor, and detection result output from the internal sensor may be used in at least one of generation of a route and generation of a running control signal. For example, the vehicle 100 may acquire detection result from the internal sensor, and in generating the route, may reflect the detection result from the internal sensor in the route. The vehicle 100 may acquire detection result from the internal sensor, and in generating the running control signal, may reflect the detection result from the internal sensor in the running control signal.

(D9) In the above-described embodiment in which the vehicle 100 can be running by autonomous control, the vehicle 100 acquires vehicle location information using detection result from the external sensor. By contrast, the vehicle 100 may be equipped with an internal sensor, the vehicle 100 may acquire vehicle location information using detection result from the internal sensor, determine a target location to which the vehicle 100 is to move next, generate a route from a current location of the vehicle 100 indicated by the acquired vehicle location information to the target location, generate a running control signal for running along the generated route, and control an actuator of the vehicle 100 using the generated running control signal. In this case, the vehicle 100 is capable of running without using any detection result from an external sensor. The vehicle 100 may acquire target arrival time or traffic congestion information from outside the vehicle 100 and reflect the target arrival time or traffic congestion information in at least one of the route and the running control signal.

(D10) In the first embodiment described above, the remote control device 200 automatically generates the running control signal to be transmitted to the vehicle 100. In contrast, the remote control device 200 may generate the running control signal to be transmitted to the vehicle 100, according to an operation by an external operator located outside the vehicle 100. For example, the external operator may operate an operating device equipped with a display for displaying captured images output from the camera CM, which is an external sensor, a steering wheel, an accelerator pedal, and a brake pedal for enabling remote control of the vehicle 100, and a communication device for enabling communication with the remote control device 200 via wired or wireless communication, and the remote control device 200 may generate the running control signal in response to the operation made on the operating device. In this embodiment, if the transfer destination of the vehicle 100 is changed, the remote control device 200 may display information regarding the new transfer destination on the display of the operating device. In this case, the operator can refer to the information displayed on the display and cause the vehicle 100 to move toward the new transfer destination by unmanned driving. Further, in this embodiment, if the vehicle 100 being driven under unmanned driving has an abnormality, the remote control unit 210 may stop the unmanned driving and start remote automatic driving to cause the vehicle 100 to move toward the new transfer destination.

(D11) In each of the above-described embodiments, the vehicle 100 is simply required to have a configuration to become movable by unmanned driving. The vehicle 100 may embodied as a platform having the following configuration, for example. The vehicle 100 is simply required to include at least actuators and a controller. More specifically, in order to fulfill three functions including "run," "turn," and "stop" by unmanned driving, the actuators may include a driving device, a steering device and a braking device. The actuators are controlled by the controller that controls running of the vehicle 100. In order for the vehicle 100 to acquire information from outside for unmanned driving, the vehicle 100 is simply required to include the communication device further. Specifically, the vehicle 100 to become movable by unmanned driving is not required to be equipped with at least some of interior components such as a driver's seat and a dashboard, is not required to be equipped with at least some of exterior components such as a bumper and a fender or is not required to be equipped with a bodyshell. In such cases, a remaining component such as a bodyshell may be mounted on the vehicle 100 before the vehicle 100 is shipped from a factory, or a remaining component such as a bodyshell may be mounted on the vehicle 100 after the vehicle 100 is shipped from a factory while the remaining component such as a bodyshell is not mounted on the vehicle 100. Each of components may be mounted on the vehicle 100 from any direction such as from above, from below, from the front, from the back, from the right, or from the left. Alternatively, these components may be mounted from the same direction or from respective different directions. The location determination for the platform may be performed in the same way as for the vehicle 100 in the first embodiments.

(D12) The vehicle 100 may be manufactured by combining a plurality of modules. The module means a unit composed of one or more components grouped according to a configuration or function of the vehicle 100. For example, a platform of the vehicle 100 may be manufactured by combining a front module, a center module and a rear module. The front module constitutes a front part of the platform, the center module constitutes a center part of the platform, and the rear module constitutes a rear part of the platform. The number of the modules constituting the platform is not limited to three but may be equal to or less than two, or equal to or greater than four. In addition to or instead of the platform, any parts of the vehicle 100 different from the platform may be modularized. Various modules may include an arbitrary exterior component such as a bumper or a grill, or an arbitrary interior component such as a seat or a console. Not only the vehicle 100 but also any types of moving object may be manufactured by combining a plurality of modules. Such a module may be manufactured by joining a plurality of components by welding or using a fixture, for example, or may be manufactured by forming at least part of the module integrally as a single component by casting. A process of forming at least part of a module as a single component is also called Giga-casting or Mega-casting. Giga-casting can form each part conventionally formed by joining multiple parts in a moving object as a single component. The front module, the center module, or the rear module described above may be manufactured using Giga-casting, for example.

(D13) A configuration for realizing running of a vehicle by unmanned driving is also called a "Remote Control auto Driving system". Conveying a vehicle using Remote Control Auto Driving system is also called "self-running conveyance". Producing the vehicle using self-running conveyance is also called "self-running production". In self-running production, for example, at least part of the conveyance of vehicles is realized by self-running conveyance in a factory where the vehicle is manufactured.

(D14) In each of the above embodiments, some or all of the functions and processes implemented by software may be implemented by hardware. Also, some or all of the functions and processes implemented by hardware may be implemented by software. As hardware for implementing the various functions in each of the above embodiments, various circuits such as integrated circuits and discrete circuits may be used.

The disclosure is not limited to any of the embodiment and its modifications described above but may be implemented by a diversity of configurations without departing from the scope of the disclosure. For example, the technical features of any of the above embodiments and their modifications may be replaced or combined appropriately, in order to solve part or all of the problems described above or in order to achieve part or all of the advantageous effects described above. Any of the technical features may be omitted appropriately unless the technical feature is described as essential in the description hereof.

REFERENCE SIGNS LIST

10, 10b ... Unmanned driving system, 100 ... Vehicle (Moving object), 110 ... Driving device, 120 ... Steering device, 130 ... Braking device, 140 ... Communication device, 150 ... Vehicle control device, 151 ... Processor, 152 ... Memory, 153 ... Input/output interface, 154 ... Internal bus, 155, 155b ... Running control unit, 156 ... Abnormality information acquisition unit, 157 ... Congestion information acquisition unit, 160 ... Sensor group, 200 ... Remote control device, 201 ... Processor, 202 ... Memory, 203 ... Input/output interface, 204 ... Internal bus, 205 ... Communication device, 210 ... Remote control unit, 220 ... Abnormality information acquisition unit, 230 ... Congestion information acquisition unit, 300 ... Step management device, 310 ... Assembly equipment, 320 ... Inspection equipment, 330 ... Repair equipment, 400 ... Camera group, CM1 - CM5 ... Camera, DB ... Database, KJ ... Factory, PG1 ... Computer program, PG2 ... Computer program, PL1 ... First place, PL2 ... Second place, PL3 ... Third place, SR ... Track

**Claims**

1. An unmanned driving system, comprising:

   a moving object configured to be movable by remote control;
   a remote control unit configured to perform remote control of the moving object, wherein the remote control unit moves the moving object from a first place in a factory to a second place in the factory, wherein the first place is where the moving object is produced, wherein the second place is different from the first place; and
   an information acquisition unit configured to acquire information regarding abnormality in the moving object,
   wherein when a predetermined condition is satisfied, the remote control unit moves the moving object to a third place in the factory before the moving object arrives at the second place, wherein the predetermined condition includes acquisition of information indicating that the moving object has an abnormality before the moving object arrives at the second place, wherein the third place is different from the first place and the second place.

2. The unmanned driving system according to claim 1, wherein

   the moving object is equipped with a sensor for detecting an abnormality in the moving object, and
   the information acquisition unit acquires information regarding an abnormality detected by using the sensor.

3. The unmanned driving system according to claim 1, wherein

   the factory is equipped with a camera for detecting an abnormality in the moving object, and
   the information acquisition unit acquires information regarding an abnormality detected by using the camera.

4. The unmanned driving system according to claim 1, wherein

   the third place is a place where a work to address an abnormality in the moving object is performed,
   the factory has a plurality of the third places, each of which has a different content of the work, and
   the remote control unit determines a transfer destination of the moving object from among the plurality of third places according to a type of abnormality in the moving object.

5. The unmanned driving system according to claim 1, wherein

   the factory has a plurality of the third places,
   the information acquisition unit further acquires information regarding a congestion level of the plurality of third places, and
   the remote control unit determines a transfer destination of the moving object from among the plurality of third places according to the congestion level of the plurality of third places.

6. The unmanned driving system according to claim 1, wherein
   the remote control unit adjusts at least one of speed and acceleration of the moving object according to a type of abnormality in the moving object.

7. The unmanned driving system according to claim 1, wherein
   when information indicating that the moving object has a predetermined type of abnormality is acquired, the remote control unit turns the moving object around and then moves the moving object backward.

8. The unmanned driving system according to claim 1, wherein
   when a condition including acquisition of information indicating that the moving object has an abnormality before the moving object arrives at the second place and a fact that the abnormality occurring in the moving object is an abnormality that interferes with a work to be performed on the moving object at the second place is satisfied, the remote control unit moves the moving object to the third place before the moving object arrives at the second place.

9. The unmanned driving system according to claim 1, wherein
   even when a condition including acquisition of information indicating that the moving object has an abnormality before the moving object arrives at the second place is satisfied, when the abnormality occurring in the moving object is an abnormality that does not interfere with a work to be performed on the moving object at the second place, the remote control unit moves the moving object to the third place after the moving object arrives at the second place.

10. The unmanned driving system according to claim 1, wherein
    even when a condition including acquisition of information indicating that the moving object has an abnormality before the moving object arrives at the second place is satisfied, when the abnormality occurring in the moving object is an abnormality that interferes with movement of the moving object, the remote control unit stops movement of the moving object.

11. A control device, comprising:

    a remote control unit configured to perform remote control of a moving object, wherein the remote control unit moves the moving object from a first place in a factory to a second place in the factory, wherein the first place is where the moving object is produced, wherein the second place is different from the first place; and
    an information acquisition unit configured to acquire information regarding abnormality in the moving object,
    wherein when a predetermined condition is satisfied, the remote control unit moves the moving object to a third place in the factory before the moving object arrives at the second place, wherein the predetermined condition includes acquisition of information indicating that the moving object has an abnormality before the moving object arrives at the second place, wherein the third place is different from the first place and the second place.

12. An unmanned driving method, comprising:

moving a moving object by unmanned driving, the moving moves the moving object from a first place in a factory to a second place in the factory, wherein the first place is where the moving object is produced, wherein the second place is different from the first place; and detecting an abnormality in the moving object, wherein when a predetermined condition is satisfied, the moving moves the moving object to a third place in the factory, wherein the predetermined condition includes detection of an abnormality of the moving object before the moving object arrives at the second place, wherein the third place is different from the first place and the second place.

13. A method for producing a moving object, comprising:

performing a first work on a moving object at a first place in a factory; moving the moving object by unmanned driving, wherein the moving moves the moving object that has undergone the first work to a second place in the factory where a second work is performed; detecting an abnormality in the moving object; and performing the second work on the moving object at the second place, wherein when a predetermined condition is satisfied, the moving moves the moving object to a third place in the factory before the moving object arrives at the second place, wherein the predetermined condition includes detection of an abnormality of the moving object before the moving object arrives at the second place, wherein the third place is different from the first place and the second place.

14. A moving object, comprising:

a control unit configured to perform unmanned driving of the moving object, wherein the control unit moves the moving object from a first place in a factory to a second place in the factory, wherein the first place is where the moving object is produced, wherein the second place is different from the first place; and an information acquisition unit configured to acquire information regarding abnormality in the moving object, wherein when a predetermined condition is satisfied, the control unit moves the moving object to a third place in the factory before the moving object arrives at the second place, wherein the predetermined condition includes acquisition of information indicating that the moving object has an abnormality before the moving object arrives at the second place, wherein the third place is different from the first place and the second place.

Fig.1A

10

100

| | |
|---|---|
| 110 — DRIVING DEVICE | SENSOR GROUP — 160 |
| 120 — STEERING DEVICE | CONTROL DEVICE — 150 |
| 130 — BRAKING DEVICE | COMMUNICATION DEVICE — 140 |

400 — CAMERA GROUP

300 — STEP MANAGEMENT DEVICE

COMMUNICATION DEVICE — 205

200

INPUT/OUTPUT INTERFACE — 203

204

201 — PROCESSOR

REMOTE CONTROL UNIT — 210

ABNORMALITY INFORMATION ACQUISITION UNIT — 220

CONGESTION INFORMATION ACQUISITION UNIT — 230

202 — MEMORY

PROGRAM — PG2

DATABASE — DB

Fig.1B

Fig.2A

EP 4 691 891 A1

Fig.2B

REMOTE CONTROL DEVICE

VEHICLE

```
┌─────────────┐
│    START    │
└─────────────┘
       │
       ▼                                              S1
┌──────────────────────────────────────────┐
│ ACQUIRE VEHICLE POSITION INFORMATION USING │
│ DETECTION RESULT FROM EXTERNAL SENSOR      │
└──────────────────────────────────────────┘
       │
       ▼                                              S2
┌──────────────────────────┐
│     DETERMINE NEXT        │
│     TARGET LOCATION       │
└──────────────────────────┘
       │
       ▼                                              S3
┌──────────────────────────┐
│    GENERATE RUNNING       │
│    CONTROL SIGNAL         │
└──────────────────────────┘
       │
       ▼                                              S4
┌──────────────────────────┐
│   TRANSMIT RUNNING CONTROL │
│   SIGNAL TO VEHICLE        │
└──────────────────────────┘
       │
       ▼
┌─────────────┐
│     END     │
└─────────────┘
```

```
┌─────────────┐
│    START    │
└─────────────┘
       │
       ▼                                              S5
┌──────────────────────────────┐
│ RECEIVE RUNNING CONTROL SIGNAL │
│ FROM REMOTE CONTROL DEVICE     │
└──────────────────────────────┘
       │
       ▼                                              S6
┌──────────────────────────────┐
│ CONTROL RESPECTIVE DEVICES     │
│ USING RUNNING CONTROL SIGNAL   │
└──────────────────────────────┘
       │
       ▼
┌─────────────┐
│     END     │
└─────────────┘
```

EP 4 691 891 A1

Fig.3

```
                    ┌─────────────────┐
                    │      START      │
                    └────────┬────────┘
                             │
                             ▼                    S110
                      ╱─────────────╲
                     ╱    VEHICLE    ╲    NO
                    ╱ HAS NOT STARTED ╲──────────────┐
                    ╲ RUNNING YET?    ╱               │
                     ╲───────────────╱                │
                             │ YES                    │
                             ▼         S120           ▼              S125
              ┌──────────────────────┐   ┌──────────────────────────┐
              │   ACQUIRE ABNORMALITY│   │   ACQUIRE ABNORMALITY    │
              │  DETECTION RESULT FROM│  │ DETECTION RESULT DETECTED │
              │ STEP MANAGEMENT DEVICE│  │ BY USING SENSOR IN VEHICLE│
              └──────────┬───────────┘   │   AND CAMERA IN FACTORY   │
                         │               └────────────┬─────────────┘
                         │◄───────────────────────────┘
                         │
                         ▼              S130
                  ╱─────────────╲
                 ╱     ANY       ╲   YES
                ╱ ABNORMALITY IN  ╲───────────┐
                ╲   VEHICLE?      ╱            │
                 ╲───────────────╱             ▼            S135
                         │ NO            ╱─────────────╲
                         │              ╱  IS RUNNING   ╲   NO
                         │              ╲  ACCEPTABLE?   ╱───────────┐
                         │               ╲─────────────╱             │
                         │                     │ YES                 │
                         ▼        S140          ▼       S145          ▼       S148
              ┌──────────────────┐  ┌──────────────────┐  ┌──────────────────┐
              │      RUN         │  │     CHANGE        │  │                  │
              │   AS PLANNED     │  │  RUNNING PLAN     │  │   STOP RUNNING   │
              │                  │  │ USING DATABASE    │  │                  │
              └────────┬─────────┘  └────────┬─────────┘  └────────┬─────────┘
                       │                     │                     │
                       │◄────────────────────┴─────────────────────┘
                       ▼
              ┌─────────────────┐
              │       END       │
              └─────────────────┘
```

Fig.4

Fig.5

EP 4 691 891 A1

Fig.6

EP 4 691 891 A1

Fig.7

Fig.8

10b

100

| 110 | DRIVING DEVICE | | SENSOR GROUP | 160 |
| 120 | STEERING DEVICE | | CONTROL DEVICE | 150 |
| 130 | BRAKING DEVICE | | COMMUNICATION DEVICE | 140 |

400

CAMERA GROUP

300

STEP MANAGEMENT DEVICE

Fig.9

150

PROCESSOR

| RUNNING CONTROL UNIT | ~155b |

| ABNORMALITY INFORMATION ACQUISITION UNIT | ~156 |

| CONGESTION INFORMATION ACQUISITION UNIT | ~157 |

MEMORY

| PROGRAM | ~PG1 |

| DATABASE | ~DB |

151

INPUT/OUTPUT INTERFACE

153

152

154

Fig.10

VEHICLE

```
        START
          │
          ▼                              S11
┌──────────────────────────────────────┐
│ ACQUIRE VEHICLE POSITION INFORMATION USING │
│ DETECTION RESULT FROM EXTERNAL SENSOR  │
└──────────────────────────────────────┘
          │
          ▼                              S21
┌──────────────────────────────────────┐
│          DETERMINE NEXT                │
│          TARGET LOCATION               │
└──────────────────────────────────────┘
          │
          ▼                              S31
┌──────────────────────────────────────┐
│          GENERATE RUNNING              │
│          CONTROL SIGNAL                │
└──────────────────────────────────────┘
          │
          ▼                              S41
┌──────────────────────────────────────┐
│     CONTROL RESPECTIVE DEVICES         │
│    USING RUNNING CONTROL SIGNAL        │
└──────────────────────────────────────┘
          │
          ▼
          END
```

Fig.11

EP 4 691 891 A1

## INTERNATIONAL SEARCH REPORT

| International application No. |
|---|
| **PCT/JP2024/009784** |

**A.　CLASSIFICATION OF SUBJECT MATTER**

*B62D 65/18*(2006.01)i; *G05B 19/418*(2006.01)i; *G05D 1/225*(2024.01)i; *G05D 1/43*(2024.01)i; *G05D 1/80*(2024.01)i
FI:　B62D65/18 Z; G05B19/418 Z; G05D1/225; G05D1/43; G05D1/80

According to International Patent Classification (IPC) or to both national classification and IPC

**B.　FIELDS SEARCHED**

Minimum documentation searched (classification system followed by classification symbols)

B62D65/18; G05B19/418; G05D1/225; G05D1/43; G05D1/80

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.　DOCUMENTS CONSIDERED TO BE RELEVANT**

| Category* | Citation of document, with indication, where appropriate, of the relevant passages | Relevant to claim No. |
|---|---|---|
| Y | JP 2017-538619 A (ROBERT BOSCH GMBH) 28 December 2017 (2017-12-28) paragraphs [0021]-[0062], fig. 3 | 1-4, 8, 10-14 |
| A | paragraphs [0021]-[0062], fig. 3 | 5-7, 9 |
| Y | JP 2021-105804 A (DAIHATSU MOTOR CO., LTD.) 26 July 2021 (2021-07-26) fig. 1 | 1-4, 8, 10-14 |
| Y | Microfilm of the specification and drawings annexed to the request of Japanese Utility Model Application No. 27683/1983 (Laid-open No. 132427/1984) (KYOCERA MITA CORP.) 05 September 1984 (1984-09-05), p. 4, line 19 to p. 5, line 2 | 1-4, 8, 10-14 |
| Y | JP 2007-276664 A (HONDA MOTOR CO., LTD.) 25 October 2007 (2007-10-25) fig. 1 | 1-4, 8, 10-14 |
| A | JP 2020-100179 A (TOYOTA JIDOSHA KABUSHIKI KAISHA) 02 July 2020 (2020-07-02) fig. 10 | 1-14 |

☐ Further documents are listed in the continuation of Box C.　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 May 2024** | **21 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT
### Information on patent family members

International application No.

**PCT/JP2024/009784**

| Patent document cited in search report | | | Publication date (day/month/year) | Patent family member(s) | | | Publication date (day/month/year) |
|---|---|---|---|---|---|---|---|
| JP | 2017-538619 | A | 28 December 2017 | US 2017/0320529 A1 fig. 3 and related description WO 2016/083029 A1 fig. 3 and related description | | | |
| JP | 2021-105804 | A | 26 July 2021 | (Family: none) | | | |
| JP | 59-132427 | U1 | 05 September 1984 | (Family: none) | | | |
| JP | 2007-276664 | A | 25 October 2007 | (Family: none) | | | |
| JP | 2020-100179 | A | 02 July 2020 | US 2020/0198714 A1 fig. 10 EP 3671383 A1 fig. 10 | | | |

Form PCT/ISA/210 (patent family annex) (July 2022)

**REFERENCES CITED IN THE DESCRIPTION**

**Patent documents cited in the description**

- JP 2023053416 A
- JP 2023181568 A
- JP 2024025085 A
- JP 2017538619 W